# EUROPEAN PATENT APPLICATION

(11) **EP 4 542 944 A1**
(43) Date of publication of application: **23.04.2025**
(21) Application number: 22946328.6
(22) Date of filing: 17.06.2022
(51) Int. Cl.: H04L 27/00

(54) **SCHEDULING DETERMINATION METHOD AND APPARATUS AND DOWNLINK CONTROL INFORMATION SENDING METHOD AND APPARATUS**

(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2022/099620
(87) International publication number: WO 2023/240647

(57) **Abstract**

The present disclosure relates to a scheduling determination method and apparatus and a downlink control information (DCI) sending method and apparatus. The scheduling determination method comprises: receiving DCI sent by a network device; determining related information of the DCI; and determining a scheduling state of the DCI according to an association relationship between the related information and the scheduling state, wherein the scheduling state comprises being used for scheduling a single cell or being used for scheduling a plurality of cells. According to the present disclosure, after receiving MC-DCI from the network device, a terminal can determine related information of the MC-DCI, and then according to the pre-stored association relationship between the related information and the scheduling state, determines a scheduling state corresponding to the related information of the MC-DCI, i.e., determining whether the MC-DCI is used for scheduling a single cell or used for scheduling a plurality of cells, so as to correctly parse the MC-DCI in an appropriate parsing manner.

## Description

### FIELD

The present invention relates to the field of communication technology, and more particularly to a scheduling determination method, a method for sending downlink control information, a scheduling determination apparatus, an apparatus for sending downlink control information, a communication device and a computer-readable storage medium.

### BACKGROUND

In the related art, a piece of downlink control information (DCI) is only used to schedule data of a cell, for example to schedule a physical uplink shared channel (PUSCH) or a physical downlink shared channel (PDSCH) of a cell.

With the fragmentation of frequency resources, the demand for scheduling data of multiple cells at the same time has gradually increased. In order to reduce the control message overhead, it is proposed to schedule data of multiple cells via single DCI, such as DCI for scheduling multiple cells (data thereof), which may be called MC-DCI, where MC represents multi-cell or multi-carrier. With the introduction of the MC-DCI, some technical problems have arisen.

### SUMMARY

In view of this, embodiments of the present invention propose a scheduling determination method, a method for sending downlink control information, a scheduling determination apparatus, an apparatus for sending downlink control information, a communication device and a computer-readable storage medium to solve technical problems in related art.

According to a first aspect of embodiments of the present invention, there is provided a scheduling determination method, which is performed by a terminal and includes: receiving downlink control information (DCI) sent by a network device; determining relevant information associated with the DCI; and determining a scheduling state of the DCI according to an association relationship between the relevant information and the scheduling state, where the scheduling state includes scheduling a single cell or scheduling multiple cells.

According to a second aspect of embodiments of the present invention, there is provided a scheduling determination method, which is performed by a terminal and includes: receiving downlink control information (DCI) sent by a network device; and determining according to indication information sent by the network device that the DCI is used to schedule a single cell or to schedule multiple cells.

According to a third aspect of embodiments of the present invention, there is provided a method for sending downlink control information, which is performed by a network device and includes: determining a scheduling state of the downlink control information (DCI), where the scheduling state includes scheduling a single cell or scheduling multiple cells; setting relevant information associated with the DCI according to an association relationship between the relevant information associated with the DCI and the scheduling state; and sending the DCI to a terminal.

According to a fourth aspect of embodiments of the present invention, there is provided a method for sending downlink control information, which is performed by a network device and includes: sending indication information to a terminal, where the indication information indicates that the downlink control information (DCI) sent to the terminal is used to schedule a single cell or to schedule multiple cells; and sending the DCI to the terminal.

According to a fifth aspect of embodiments of the present invention, there is provided a scheduling determination apparatus, which includes: a receiving module, configured to receive downlink control information (DCI) sent by a network device; and a processing module, configured to: determine relevant information associated with the DCI; and determine a scheduling state of the DCI according to an association relationship between the relevant information and the scheduling state, where the scheduling state includes scheduling a single cell or scheduling multiple cells.

According to a sixth aspect of embodiments of the present invention, there is provided a scheduling determination apparatus, which includes: a receiving module, configured to receive downlink control information (DCI) sent by a network device; and a processing module, configured to determine according to indication information sent by the network device that the DCI is used to schedule a single cell or to schedule multiple cells.

According to a seventh aspect of embodiments of the present invention, there is provided an apparatus for sending downlink control information, which includes: a processing module, configured to: determine a scheduling state of the downlink control information (DCI), where the scheduling state includes scheduling a single cell or scheduling multiple cells; and set relevant information associated with the DCI according to an association relationship between the relevant information associated with the DCI and the scheduling state; and a sending module, configured to send the DCI to a terminal.

According to an eighth aspect of embodiments of the present invention, there is provided an apparatus for sending downlink control information, which includes: a sending module, configured to: send indication information to a terminal, where the indication information indicates that the downlink control information (DCI) sent to the terminal is used to schedule a single cell or to schedule multiple cells; and send the DCI to the terminal.

According to a ninth aspect of embodiments of the present invention, there is provided a communication device, which includes: a processor; and a memory for storing computer programs, where when the computer programs are executed by the processor, the scheduling determination method described above is implemented.

According to a tenth aspect of embodiments of the present invention, there is provided a communication device, which includes: a processor; and a memory for storing computer programs; where when the computer programs are executed by the processor, the method for sending downlink control information described above is implemented.

According to an eleventh aspect of embodiments of the present invention, there is provided a computer-readable storage medium having stored therein computer programs that, when executed by a processor, cause steps in the scheduling determination method described above to be implemented.

According to a twelfth aspect of embodiments of the present invention, there is provided a computer-readable storage medium having stored therein computer programs that, when executed by a processor, cause steps in the method for sending downlink control information described above to be implemented.

According to embodiments of the present invention, after receiving the MC-DCI from the network device, the terminal can determine relevant information associated with the MC-DCI, and then determine a scheduling state corresponding to the relevant information associated with the MC-DCI according to a pre-stored association relationship between the relevant information and the scheduling state. That is, the terminal determines whether the MC-DCI is used to schedule a single cell or multiple cells, so as to adopt an appropriate analysis mode to correctly analyze the MC-DCI.

According to embodiments of the present invention, after receiving the MC-DCI from the network device, the terminal can determine whether the MC-DCI is used to schedule a single cell or multiple cells according to the indication information sent by the network device, so as to adopt an appropriate analysis mode to correctly analyze the MC-DCI.

### BRIEF DESCRIPTION OF THE DRAWINGS

In order to more clearly illustrate the technical solutions in embodiments of the present invention, drawings needed to be used in the description of the embodiments will be briefly described below. Apparently, the drawings described below are related to some embodiments of the present invention, and other drawings may be obtained by those of ordinary skill in the art based on these drawings without creative effort.
FIG. 1 is a schematic flowchart of a scheduling determination method according to embodiments of the present invention.
FIG. 2 is a schematic flowchart of a scheduling determination method according to embodiments of the present invention.
FIG. 3 is a schematic diagram showing an application scenario of a scheduling determination method according to embodiments of the present invention.
FIG. 4 is a schematic flowchart of a method for sending downlink control information according to embodiments of the present invention.
FIG. 5 is a schematic flowchart of a method for sending downlink control information according to embodiments of the present invention.
FIG. 6 is a schematic block diagram of a scheduling determination apparatus according to embodiments of the present invention.
FIG. 7 is a schematic block diagram of a scheduling determination apparatus according to embodiments of the present invention.
FIG. 8 is a schematic block diagram of an apparatus for sending downlink control information according to embodiments of the present invention.
FIG. 9 is a schematic block diagram of an apparatus for sending downlink control information according to embodiments of the present invention.
FIG. 10 is a schematic block diagram of an apparatus for sending downlink control information according to embodiments of the present invention.
FIG. 11 is a schematic block diagram of an apparatus for scheduling determination according to embodiments of the present invention.

### DETAILED DESCRIPTION

Technical solutions in embodiments of the present invention will be described clearly and thoroughly below with reference to accompanying drawings. Apparently, the embodiments described herein are only some embodiments, rather than all embodiments of the present invention. All other embodiments obtained by those skilled in the art based on the embodiments described herein without creative labors shall belong to the protection scope of the present invention.

Terms used in embodiments of the present invention are for the purpose of describing specific embodiments, and not intended to limit embodiments of the present invention. As used in embodiments of the present invention and the appended claims, "a/an" and "the" in a singular form are intended to include plural forms, unless clearly indicated in the context otherwise. It should also be understood that, the term "and/or" used herein represents and includes any one or any possible combinations of one or more associated listed items.

It should be understood that even though terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. Depending on the context, the term "if" as used herein may be construed to mean "when", "upon" or "in response to determining".

For the purposes of brevity and ease of understanding, terms "greater than" or "less than", "higher than" or "lower than" are used herein for indicating size relationships. However, it may be understood for a person skilled in the art that the term "greater than" also covers a meaning of "greater than or equal to", the term "less than" also covers a meaning of "less than or equal to"; the term "higher than" also covers a meaning of "higher than or equal to", and the term "lower than" also covers a meaning of "lower than or equal to".

In an embodiment, in a case where DCI for scheduling multiple cells (for example, scheduling data of 3, 4, or 8 serving cells) is introduced, the DCI for scheduling multiple cells may be called MC-DCI, where MC represents multi-cell or multi-carrier. Scheduling a cell or cells described in all embodiments of the present invention refers to scheduling the data of the cell or cells.

The MC-DCI, as a newly introduced DCI, may have a different format from that of legacy DCI. The legacy DCI includes, but is not limited to, DCI for scheduling a single cell, such as DCI format 0_0, DCI format 1_0, DCI format 0_1, DCI format 1_1, DCI format 0_2, and DCI format 1_2. The MC-DCI may include DCI format 0_3 and DCI format 1_3.

The MC-DCI can be used to schedule multiple cells, and in order to support scheduling flexibility, the MC-DCI may also be used to schedule a single cell in some cases. Therefore, for a terminal, the MC-DCI may be used to schedule multiple cells or a single cell. However, the analysis modes for MC-DCI that schedules multiple cells and MC-DCI that schedules a single cell are different, so the terminal needs to know whether the MC-DCI is used to schedule multiple cells or a single cell, so as to use a corresponding analysis mode to correctly analyze the MC-DCI.

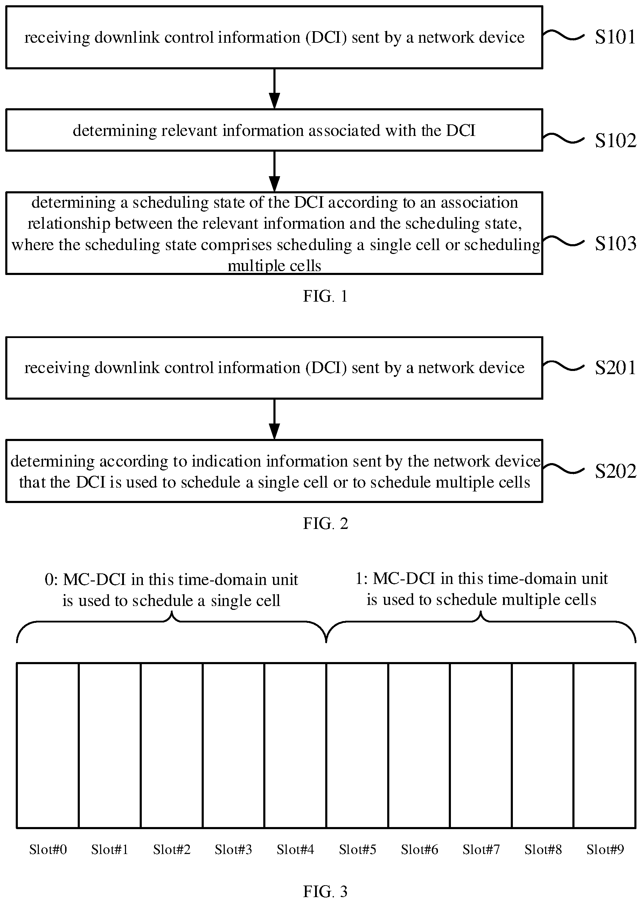

FIG. 1 is a schematic flowchart of a scheduling determination method according to embodiments of the present invention. The scheduling determination method shown in embodiments may be performed by a terminal, which includes, but is not limited to, communication devices such as mobile phones, tablet computers, wearable devices, sensors, or Internet of Things devices. The terminal can communicate with a network device, and the network device includes, but is not limited to, network devices in 4G, 5G, 6G or other communication systems, such as base stations, core networks, etc.

As shown in FIG. 1, the scheduling determination method may include the following steps.

In step S101, downlink control information (DCI) sent by a network device is received.

In step S102, relevant information associated with the DCI is determined.

In step S103, a scheduling state of the DCI is determined according to an association relationship between the relevant information and the scheduling state, where the scheduling state includes scheduling a single cell or scheduling multiple cells.

In an embodiment, the terminal can determine whether the DCI sent by the network device is MC-DCI or legacy DCI. In a case where it is determined that the DCI sent by the network device is the legacy DCI, it is not necessary to perform the steps in embodiments of the present invention. In a case where it is determined that the DCI sent by the network device is the MC-DCI, the steps in embodiments of the present invention are performed.

The terminal can determine whether the DCI is the MC-DCI or the legacy DCI according to the format of the DCI, or the terminal can determine whether the DCI is the MC-DCI or the legacy DCI in other ways, for example, according to a resource used to receive the DCI, which is not limited in the present invention.

According to embodiments of the present invention, after receiving the MC-DCI from the network device, the terminal can determine relevant information associated with the MC-DCI, and then determine a scheduling state corresponding to the relevant information associated with the MC-DCI according to a pre-stored association relationship between the relevant information and the scheduling state. That is, the terminal determines whether the MC-DCI is used to schedule a single cell or multiple cells, so as to adopt an appropriate analysis mode to correctly analyze the MC-DCI.

In an embodiment, the relevant information includes at least one of:
a radio network temporary identity (RNTI) used to scramble the DCI; or
a resource used to receive the DCI.

For example, after receiving the MC-DCI, the terminal can determine an RNTI used to scramble the MC-DCI. For example, the association relationship is that a first RNTI corresponds to scheduling a single cell, and a second RNTI corresponds to scheduling multiple cells. When it is determined that the RNTI used to scramble the MC-DCI is the first RNTI, it can be determined that the MC-DCI is used to schedule a single cell. When it is determined that the RNTI used to scramble the MC-DCI is the second RNTI, it can be determined that the MC-DCI is used to schedule multiple cells. The first RNTI may be a cell radio network temporary identity (C-RNTI), and the second RNTI may be other RNTI, such as a newly set RNTI, which may be called MC-RNTI, where MC represents multi-cell or multi-carrier.

For example, after receiving the MC-DCI, the terminal can determine a resource used to receive the MC-DCI. For example, the association relationship is that a first resource corresponds to scheduling a single cell, and a second resource corresponds to scheduling multiple cells. When it is determined that the MC-DCI is received through the first resource, it is determined that the MC-DCI is used to schedule a single cell. When it is determined that the MC-DCI is received through the second resource, and it is determined that the MC-DCI is used for scheduling multiple cells.

In an embodiment, the resource includes at least one of:
a cell;
a bandwidth part (BWP);
a control resource set (CORESET); or
a search space (SS).

Illustration is made with reference to an example where the resource includes the SS, for example, the association relationship is that SS#1 corresponds to scheduling a single cell, and SS#2 corresponds to scheduling multiple cells. When it is determined that the MC-DCI is received in SS#1, it is determined that the MC-DCI is used to schedule a single cell. When it is determined that the MC-DCI is received in SS#2, it is determined that the MC-DCI is used to schedule multiple cells.

In an embodiment, the method further includes: determining the association relationship according to a protocol; and/or determining the association relationship according to indication information sent by the network device.

The association relationship may be stipulated in the protocol; it may also be determined by the network device and indicated to the terminal through the indication information; or a candidate set of association relationships are stipulated in the protocol, and the network device indicates an association relationship in the candidate set to the terminal through the indication information.

FIG. 2 is a schematic flowchart of a scheduling determination method according to embodiments of the present invention. The scheduling determination method shown in embodiments may be performed by a terminal, which includes, but is not limited to, communication devices such as mobile phones, tablet computers, wearable devices, sensors, or Internet of Things devices. The terminal can communicate with a network device, and the network device includes, but is not limited to, network devices in 4G, 5G, 6G or other communication systems, such as base stations, core networks, etc.

As shown in FIG. 2, the scheduling determination method may include the following steps.

In step S201, downlink control information (DCI) sent by a network device is received.

In step S202, it is determined according to indication information sent by the network device that the DCI is used to schedule a single cell or to schedule multiple cells.

In an embodiment, the terminal can determine whether the DCI sent by the network device is MC-DCI or legacy DCI. In a case where it is determined that the DCI sent by the network device is the legacy DCI, it is not necessary to perform the steps in embodiments of the present invention. In a case where it is determined that the DCI sent by the network device is the MC-DCI, the steps in embodiments of the present invention are performed.

The terminal can determine whether the DCI is the MC-DCI or the legacy DCI according to the format of the DCI, or the terminal can determine whether the DCI is the MC-DCI or the legacy DCI in other ways, for example, according to a resource used to receive the DCI, which is not limited in the present invention.

According to embodiments of the present invention, after receiving the MC-DCI from the network device, the terminal can determine, according to the indication information sent by the network device (which may be received before or after receiving the MC-DCI, or may be included in the MC-DCI), whether the MC-DCI is used to schedule a single cell or multiple cells, so as to adopt an appropriate analysis mode to correctly analyze the MC-DCI.

It should be noted that, in a case where the terminal has pre-stored the association relationship as described in the previous embodiments, the terminal can also receive the indication information sent by the terminal, and in this case, the terminal can determine whether the DCI is used to schedule a single cell or multiple cells according to the indication information preferentially.

In an embodiment, the indication information includes at least one of:
a radio resource control (RRC) message;
the DCI; or
a medium access control control element (MAC CE).

The network device may send the indication information before sending the MC-DCI to the terminal, and the terminal may receive the indication information before receiving the MC-DCI, for example, the terminal receives the RRC message and/or the MAC CE before receiving the MC-DCI, so that the terminal can determine whether the MC-DCI received subsequently is used to schedule multiple cells or a single cell.

The network device can carry the indication information in the MC-DCI and send it to the terminal. After receiving the MC-DCI, the terminal can first analyze the indication information in the MC-DCI, determine according to the indication information whether the MC-DCI is used to schedule multiple cells or a single cell, and then analyze the MC-DCI for scheduling multiple cells using an analysis mode that is used to analyze the MC-DCI for scheduling multiple cells, or analyze the MC-DCI for scheduling a single cell using an analysis mode that is used to analyze the MC-DCI for scheduling a single cell.

The above several kinds of indication information are described below through several embodiments.

In an embodiment, in a case where the indication information includes the RRC message, the indication information includes a time pattern, and the time pattern is configured through a bitmap in the RRC message. The bitmap includes n bits, and an i-th bit of the n bits indicates that the DCI in an i-th time-domain unit of n time-domain units is used to schedule a single cell or to schedule multiple cells, where n and i are integers, and 1≤i≤n.

In an embodiment, the time-domain unit includes at least one of:
at least one radio frame;
at least one slot; or
at least one time-domain symbol.

FIG. 3 is a schematic diagram showing an application scenario of a scheduling determination method according to embodiments of the present invention.

As shown in FIG. 3, taking a case where the time-domain unit includes 5 slots as an example, 10 slots from slot #0 to slot #9 include 2 time-domain units. For example, the indication information is a 2-bit bitmap, where a first bit is used to indicate whether the MC-DCI in a first time-domain unit (i.e., slot #0 to slot #4) is used to schedule a single cell or schedule multiple cells, and a second bit is used to indicate whether the MC-DCI in a second time-domain unit (i.e., slot #5 to slot #9) is used to schedule a single cell or schedule multiple cells.

For example, a bit with a value of 0 is used to indicate that the MC-DCI in the time-domain unit is used to schedule a single cell, and a bit with a value of 1 is used to indicate that the MC-DCI in the time-domain unit is used to schedule multiple cells. Then, an indication of 01 may indicate that the MC-DCI in slot #0 to slot #4 is used to schedule a single cell, and the MC-DCI in slot #5 to slot #9 is used to schedule multiple cells.

It should be noted that the time pattern may be indicated via an RRC message, or may be specified by a protocol, that is, the terminal may also determine the indication information according to the protocol.

In an embodiment, in a case where the indication information includes the DCI, the indication information is indicated through a preset information field in the DCI, and the preset information field includes an information field at a preset position or before the preset position in the DCI.

When the network device carries the indication information in the MC-DCI and sends it to the terminal, the terminal needs to correctly analyze the MC-DCI to determine the indication information carried therein, so the indication information may be set in an information field at an earlier position in the MC-DCI, for example, set in the preset information field. The preset information field is an information field at a preset position or before the preset position in MC-DCI. For example, the preset position is a second information field, and the indication information may be set in the second information field or the information field before the second information field (i.e., a first information field). The earlier the position of the information field is, the more preferentially it is analyzed by the terminal.

In this way, it can be ensured that after receiving the MC-DCI, the terminal can determine as soon as possible whether the MC-DCI is used to schedule a single cell or multiple cells by analyzing the information field at the earlier position, so as to adopt an appropriate analysis mode to analyze the subsequent information field, to avoid waste of resources and time of the terminal caused by analyzing too many information fields for correct analysis when it has not yet been determined whether the MC-DCI is used to schedule a single cell or multiple cells.

In an embodiment, in a case where the indication information includes the MAC CE, determining according to indication information sent by the network device that the DCI is used to schedule a single cell or to schedule multiple cells includes:
determining that the DCI is used to schedule the multiple cells, when it is determined according to the MAC CE that single-cell scheduling is deactivated or multi-cell scheduling is activated; and/or determining that the DCI is used to schedule the single cell, when it is determined according to the MAC CE that single-cell scheduling is activated or multi-cell scheduling is deactivated.

The network device can dynamically activate or deactivate the single-cell scheduling, and can also dynamically activate or deactivate the multi-cell scheduling, by sending the MAC CE to the terminal.

In a case where the terminal determines according to the MAC CE that the single-cell scheduling is deactivated (the MC-DCI is not used for the single-cell scheduling) or the multi-cell scheduling is activated (the MC-DCI is used for the multi-cell scheduling), it can be determined that the MC-DCI is used for multi-cell scheduling; and in a case where it is determined according to the MAC CE that the single-cell scheduling is activated (the MC-DCI is used for the single-cell scheduling) or the multi-cell scheduling is deactivated (the MC-DCI is not used for the multi-cell scheduling), it can be determined that the MC-DCI is used for single-cell scheduling.

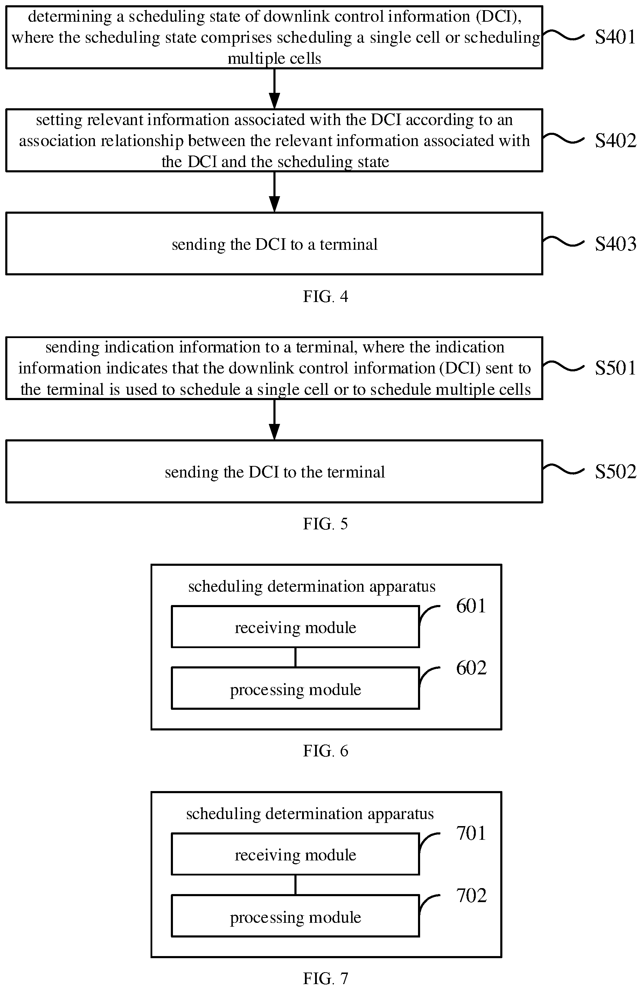

FIG. 4 is a schematic flowchart of a method for sending downlink control information according to embodiments of the present invention. The method for sending downlink control information shown in embodiments may be performed by a network device, the network device can communicate with a terminal, the network device includes, but is not limited to, base stations in communication systems, such as 4G base stations, 5G base stations, or 6G base stations, and the terminal includes, but is not limited to, mobile phones, tablet computers, wearable devices, sensors, Internet of Things devices, or other communication devices.

As shown in FIG. 4, the method for sending downlink control information may include the following steps.

In step S401, a scheduling state of the downlink control information (DCI) is determined, where the scheduling state includes scheduling a single cell or scheduling multiple cells.

In step S402, relevant information associated with the DCI is set according to an association relationship between the relevant information associated with the DCI and the scheduling state.

In step S403, the DCI is sent to a terminal.

In an embodiment, the network device can determine whether the DCI that needs to be sent to the terminal is MC-DCI or legacy DCI. In a case where it is determined that the DCI that needs to be sent to the terminal is the legacy DCI, it is not necessary to perform the steps in embodiments of the present invention, and in a case where it is determined that the DCI that needs to be sent to the terminal is the MC-DCI, the steps in embodiments of the present invention are performed.

The network device can set different formats for the MC-DCI and the legacy DCI, so that the terminal can distinguish them. Of course, the terminal can also distinguish them in other ways, for example distinguishing them according to a resource used to receive the DCI, which is not limited in the present invention.

According to embodiments of the present invention, in a case where the network sends the MC-DCI to the terminal, it can set relevant information associated with the MC-DCI according to an association relationship between the relevant information associated with the MC-DCI and the scheduling state, so that the terminal, after receiving the MC-DCI from the network device, can determine the scheduling state corresponding to the relevant information associated with the MC-DCI according to the association relationship between the relevant information and the scheduling state pre-stored. That is, the terminal determines whether the MC-DCI is used to schedule a single cell or multiple cells, so as to adopt an appropriate analysis mode to correctly analyze the MC-DCI.

In an embodiment, the relevant information includes at least one of:
a radio network temporary identity (RNTI) used to scramble the DCI; or
a resource used to receive the DCI.

The network device can use different RNTIs to scramble the MC-DCI for scheduling a single cell and the MC-DCI for scheduling multiple cells. For example, the association relationship is that a first RNTI corresponds to scheduling a single cell, and a second RNTI corresponds to scheduling multiple cells. When it is determined that the MC-DCI that needs to be sent to the terminal is used to schedule a single cell, the first RNTI can be used to scramble the MC-DCI, so that after receiving the MC-DCI, the terminal can determine that the MC-DCI is used to schedule a single cell; when it is determined that the MC-DCI that needs to be sent to the terminal is used to schedule multiple cells, the second RNTI can be used to scramble the MC-DCI, so that after receiving the MC-DCI, the terminal can determine that the MC-DCI is used to schedule multiple cells. The first RNTI may be a cell radio network temporary identity (C-RNTI), and the second RNTI may be other RNTI, such as a newly set RNTI, which may be called MC-RNTI, where MC represents multi-cell or multi-carrier.

The network device can use different resources to send the MC-DCI for scheduling a single cell and the MC-DCI for scheduling multiple cells. For example, the association relationship is that a first resource corresponds to scheduling a single cell, and a second resource corresponds to scheduling multiple cells. When it is determined that the MC-DCI that needs to be sent to the terminal is used to schedule a single cell, the first resource can be used to send the MC-DCI, so that after receiving the MC-DCI, the terminal can determine that the MC-DCI is used to schedule a single cell; when it is determined that the MC-DCI that needs to be sent to the terminal is used to schedule multiple cells, the second resource can be used to send the MC-DCI, so that after receiving the MC-DCI, the terminal can determine that the MC-DCI is used to schedule multiple cells.

In an embodiment, the resource includes at least one of:
a cell;
a bandwidth part (BWP);
a control resource set (CORESET); or
a search space (SS).

Illustration is made with reference to an example where the resource includes the SS, for example, the association relationship is that SS#1 corresponds to scheduling a single cell, and SS#2 corresponds to scheduling multiple cells. When it is determined that the MC-DCI that needs to be sent to the terminal is used to schedule a single cell, the MC-DCI can be sent in the SS#1, and when it is determined that the MC-DCI that needs to be sent to the terminal is used to schedule multiple cells, the MC-DCI can be sent in the SS#2.

In an embodiment, the method further includes: determining the association relationship according to a protocol; and/or sending indication information to the terminal, where the indication information indicates the association relationship.

The association relationship may be stipulated in the protocol; it may also be determined by the network device and indicated to the terminal through the indication information; or a candidate set of association relationships are stipulated in the protocol, and the network device indicates an association relationship in the candidate set to the terminal through the indication information.

FIG. 5 is a schematic flowchart of a method for sending downlink control information according to embodiments of the present invention. The method for sending downlink control information shown in embodiments may be performed by a network device, the network device can communicate with a terminal, the network device includes, but is not limited to, base stations in communication systems, such as 4G base stations, 5G base stations, or 6G base stations, and the terminal includes, but is not limited to, mobile phones, tablet computers, wearable devices, sensors, Internet of Things devices, or other communication devices.

As shown in FIG. 5, the method for sending downlink control information may include the following steps.

In step S501, indication information is sent to the terminal, and the indication information indicates that the downlink control information (DCI) sent to the terminal is used to schedule a single cell or to schedule multiple cells.

In step S502, the DCI is sent to the terminal.

In an embodiment, the network device can determine whether the DCI that needs to be sent to the terminal is MC-DCI or legacy DCI. In a case where it is determined that the DCI that needs to be sent to the terminal is the legacy DCI, it is not necessary to perform the steps in embodiments of the present invention, and in a case where it is determined that the DCI that needs to be sent to the terminal is the MC-DCI, the steps in embodiments of the present invention are performed.

The network device can set different formats for the MC-DCI and the legacy DCI, so that the terminal can distinguish them. Of course, the terminal can also distinguish them in other ways, for example distinguishing them according to a resource used to receive the DCI, which is not limited in the present invention.

According to embodiments of the present invention, the network device can send the indication information (which can be sent before sending the MC-DCI, or can be sent by carrying it in the MC-DCI) to the terminal to indicate whether the MC-DCI sent to the terminal is used to schedule a single cell or schedule multiple cells. After receiving the MC-DCI from the network device, the terminal can determine according to the indication information whether the MC-DCI is used to schedule a single cell or schedule multiple cells, so as to adopt an appropriate analysis mode to correctly analyze the MC-DCI.

It should be noted that, in a case where the terminal has pre-stored the association relationship as described in the previous embodiments, the network device can also sent the indication information to the terminal, and in this case, the terminal can determine whether the DCI is used to schedule a single cell or multiple cells according to the indication information preferentially.

In an embodiment, the indication information includes at least one of:
a radio resource control (RRC) message;
the DCI; or
a medium access control control element (MAC CE).

The network device may send the indication information before sending the MC-DCI to the terminal, and the terminal may receive the indication information before receiving the MC-DCI, for example, the terminal receives the RRC message and/or the MAC CE before receiving the MC-DCI, so that the terminal can determine whether the MC-DCI received subsequently is used to schedule multiple cells or a single cell.

The network device can carry the indication information in the MC-DCI and send it to the terminal. After receiving the MC-DCI, the terminal can first analyze the indication information in the MC-DCI, determine according to the indication information whether the MC-DCI is used to schedule multiple cells or a single cell, and then analyze the MC-DCI for scheduling multiple cells using an analysis mode that is used to analyze the MC-DCI for scheduling multiple cells, or analyze the MC-DCI for scheduling a single cell using an analysis mode that is used to analyze the MC-DCI for scheduling a single cell.

In an embodiment, in a case where the indication information includes the RRC message, the indication information includes a time pattern, and the time pattern is configured through a bitmap in the RRC message. The bitmap includes n bits, and an i-th bit of the n bits indicates that the DCI in an i-th time-domain unit of n time-domain units is used to schedule a single cell or to schedule multiple cells, where n and i are integers, and 1≤i≤n.

In an embodiment, the time-domain unit includes at least one of:
at least one radio frame;
at least one slot; or
at least one time-domain symbol.

In an embodiment, in a case where the indication information includes the DCI, the indication information is indicated through a preset information field in the DCI, and the preset information field includes an information field at a position that is ranked at a preset rank or before the preset rank in the DCI.

When the network device carries the indication information in the MC-DCI and sends it to the terminal, the terminal needs to correctly analyze the MC-DCI to determine the indication information carried therein, so the indication information may be set in an information field at an earlier position in the MC-DCI, for example, set in the preset information field. The preset information field is an information field at a position that is ranked at a preset rank or before the preset rank in the MC-DCI. For example, the preset rank is 1, then the preset information field is a first information field in the MC-DCI.

In this way, it can be ensured that after receiving the MC-DCI, the terminal can determine as soon as possible whether the MC-DCI is used to schedule a single cell or multiple cells by analyzing the first information field, so as to adopt an appropriate analysis mode to analyze the subsequent information field, to avoid waste of resources and time of the terminal caused by analyzing too many information fields for correct analysis when it has not yet been determined whether the MC-DCI is used to schedule a single cell or multiple cells.

In an embodiment, when the indication information is indicated through the preset information field in the DCI, the preset information field may occupy 1 bit, and the indication information may be as shown in Table 1 below:

**Table 1**

| indication information | description |
|---|---|
| 0 | MC-DCI used to schedule a single cell |
| 1 | MC-DCI used to schedule multiple cells |

As shown in Table 1, when the terminal determines that the value of the preset information field in the MC-DCI is 0, it can determine that the MC-DCI is used to schedule a single cell, and when the terminal determines that the value of the preset information field in the MC-DCI is 1, it can determine that the MC-DCI is used to schedule multiple cells.

In an embodiment, the indication information includes the MAC CE. In a case where the MAC CE is used to deactivate single-cell scheduling or activate multi-cell scheduling, the MAC CE indicates that the DCI is used to schedule multiple cells, and/or in a case where the MAC CE is used to activate single-cell scheduling or deactivate multi-cell scheduling, the MAC CE indicates that the DCI is used to schedule a single cell.

The network device can dynamically activate or deactivate the single-cell scheduling, and can also dynamically activate or deactivate the multi-cell scheduling, by sending the MAC CE to the terminal

In a case where the terminal determines according to the MAC CE that the single-cell scheduling is deactivated (the MC-DCI is not used for the single-cell scheduling) or the multi-cell scheduling is activated (the MC-DCI is used for the multi-cell scheduling), it can be determined that the MC-DCI is used for multi-cell scheduling; and in a case where it is determined according to the MAC CE that the single-cell scheduling is activated (the MC-DCI is used for the single-cell scheduling) or the multi-cell scheduling is deactivated (the MC-DCI is not used for the multi-cell scheduling), it can be determined that the MC-DCI is used for single-cell scheduling.

Corresponding to the foregoing embodiments of the scheduling determination method and the method for sending downlink control information, the present invention also provides embodiments of a scheduling determination apparatus and an apparatus for sending downlink control information.

FIG. 6 is a schematic block diagram of a scheduling determination apparatus according to embodiments of the present invention. The scheduling determination apparatus shown in embodiments may be a terminal or an apparatus composed of modules in the terminal. The terminal includes, but is not limited to, communication devices such as mobile phones, tablet computers, wearable devices, sensors, or Internet of Things devices. The terminal can communicate with a network device, and the network device includes, but is not limited to, network devices in 4G, 5G, 6G or other communication systems, such as base stations, core networks, etc.

As shown in FIG. 6, the scheduling determination apparatus includes:
a receiving module 601, configured to receive downlink control information (DCI) sent by a network device; and
a processing module 602, configured to: determine relevant information associated with the DCI; and determine a scheduling state of the DCI according to an association relationship between the relevant information and the scheduling state, where the scheduling state includes scheduling a single cell or scheduling multiple cells.

In an embodiment, the relevant information includes at least one of: a radio network temporary identity (RNTI) used to scramble the DCI; or a resource used to receive the DCI.

In an embodiment, the resource includes at least one of: a cell; a bandwidth part (BWP); a control resource set (CORESET); or a search space (SS).

In an embodiment, the processing module 602 is further configured to: determine the association relationship according to a protocol; and/or determine the association relationship according to indication information sent by the network device.

FIG. 7 is a schematic block diagram of a scheduling determination apparatus according to embodiments of the present invention. The scheduling determination apparatus shown in embodiments may be a terminal or an apparatus composed of modules in the terminal. The terminal includes, but is not limited to, communication devices such as mobile phones, tablet computers, wearable devices, sensors, or Internet of Things devices. The terminal can communicate with a network device, and the network device includes, but is not limited to, network devices in 4G, 5G, 6G or other communication systems, such as base stations, core networks, etc.

As shown in FIG. 7, the scheduling determination apparatus includes:
a receiving module 701, configured to receive downlink control information (DCI) sent by a network device; and
a processing module 702, configured to determine according to indication information sent by the network device that the DCI is used to schedule a single cell or to schedule multiple cells.

In an embodiment, the indication information includes at least one of: a radio resource control (RRC) message; the DCI; or a medium access control control element (MAC CE).

In an embodiment, in a case where the indication information includes the RRC message, the indication information includes a time pattern, the time pattern is configured through a bitmap in the RRC message, the bitmap includes n bits, and an i-th bit of the n bits indicates that DCI in an i-th time-domain unit of n time-domain units is used to schedule the single cell or to schedule the multiple cells, where n and i are integers, and 1≤i≤n.

In an embodiment, the time-domain unit includes at least one of: at least one radio frame; at least one slot; or at least one time-domain symbol.

In an embodiment, in a case where the indication information includes the DCI, the indication information is indicated through a preset information field in the DCI, and the preset information field includes an information field at a position that is ranked at a preset rank or before the preset rank in the DCI.

In an embodiment, in a case where the indication information includes the MAC CE, the processing module is configured to: determine that the DCI is used to schedule the multiple cells, when it is determined according to the MAC CE that single-cell scheduling is deactivated or multi-cell scheduling is activated; and/or determine that the DCI is used to schedule the single cell, when it is determined according to the MAC CE that single-cell scheduling is activated or multi-cell scheduling is deactivated.

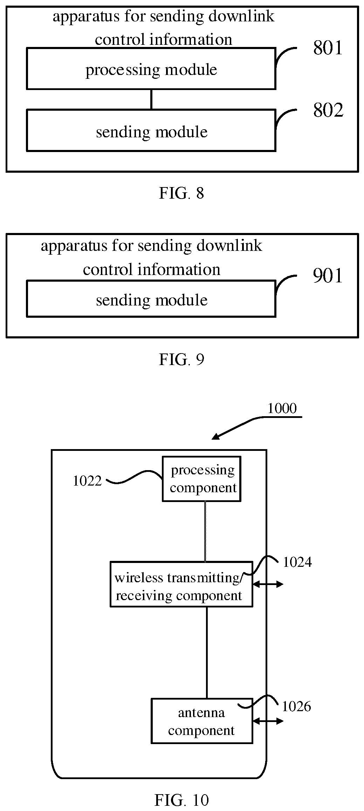

FIG. 8 is a schematic block diagram of an apparatus for sending downlink control information according to embodiments of the present invention. The apparatus for sending downlink control information shown in embodiments may be a network device or an apparatus composed of modules in the network device. The network device can communicate with a terminal, and the terminal includes, but is not limited to, communication devices such as mobile phones, tablet computers, wearable devices, sensors, or Internet of Things devices. The network device includes, but is not limited to, network devices in 4G, 5G, 6G or other communication systems, such as base stations, core networks, etc.

As shown in FIG. 8, the apparatus for sending downlink control information includes:
a processing module 801, configured to: determine a scheduling state of the downlink control information (DCI), where the scheduling state includes scheduling a single cell or scheduling multiple cells; and set relevant information associated with the DCI according to an association relationship between the relevant information associated with the DCI and the scheduling state; and
a sending module 802, configured to send the DCI to a terminal.

In an embodiment, the relevant information includes at least one of: a radio network temporary identity (RNTI) used to scramble the DCI; or a resource used to receive the DCI.

In an embodiment, the processing module is further configured to determine the association relationship according to a protocol; and/or the sending module is further configured to send indication information to the terminal, where the indication information indicates the association relationship.

FIG. 9 is a schematic block diagram of an apparatus for sending downlink control information according to embodiments of the present invention. The apparatus for sending downlink control information shown in embodiments may be a network device or an apparatus composed of modules in the network device. The network device can communicate with a terminal, and the terminal includes, but is not limited to, communication devices such as mobile phones, tablet computers, wearable devices, sensors, or Internet of Things devices. The network device includes, but is not limited to, network devices in 4G, 5G, 6G or other communication systems, such as base stations, core networks, etc.

As shown in FIG. 9, the apparatus for sending downlink control information includes:
a sending module 901, configured to: send indication information to a terminal, where the indication information indicates that the downlink control information (DCI) sent to the terminal is used to schedule a single cell or to schedule multiple cells; and send the DCI to the terminal.

In an embodiment, the indication information includes at least one of: a radio resource control (RRC) message; the DCI; or a medium access control control element (MAC CE).

In an embodiment, in a case where the indication information includes the RRC message, the indication information includes a time pattern, the time pattern is configured through a bitmap in the RRC message, the bitmap includes n bits, and an i-th bit of the n bits indicates that DCI in an i-th time-domain unit of n time-domain units is used to schedule the single cell or to schedule the multiple cells, where n and i are integers, and 1≤i≤n.

In an embodiment, in a case where the indication information includes the DCI, the indication information is indicated through a preset information field in the DCI, and the preset information field includes an information field at a position that is ranked at a preset rank or before the preset rank in the DCI.

In an embodiment, the indication information includes the MAC CE, in a case where the MAC CE is used to deactivate single-cell scheduling or activate multi-cell scheduling, the MAC CE indicates that the DCI is used to schedule the multiple cells, and/or in a case where the MAC CE is used to activate single-cell scheduling or deactivate multi-cell scheduling, the MAC CE indicates that the DCI is used to schedule the single cell.

With respect to the apparatuses in the above embodiments, the specific manners of individual modules therein for performing operations have been described in detail in the embodiments of the related methods, which will not be elaborated herein.

As for the apparatus embodiments, since they basically correspond to the method embodiment, reference may be made to the description of the method embodiment for relevant parts. The above-described apparatus embodiments are for the purpose of illustration, in which the modules described as separate components may be or may not be physically separated, and the components displayed as modules may be or may not be physical modules, that is, either located at one place or distributed onto a plurality of network modules. The object of embodiments of the present invention may be achieved by some or all of the modules in accordance with practical requirements. It would be appreciated and executable by those skilled in the art without creative efforts.

Embodiments of the present invention also provide a communication device, which includes: a processor; and a memory for storing computer programs. When the computer programs are executed by the processor, the scheduling determination method according to any of the above embodiments is implemented.

Embodiments of the present invention also provide a communication device, which includes: a processor; and a memory for storing computer programs. When the computer programs are executed by the processor, the method for sending downlink control information according to any of the above embodiments is implemented.

Embodiments of the present invention also provide a computer-readable storage medium having stored therein computer programs that, when executed by a processor, cause steps in the scheduling determination method according to any of the above embodiments to be implemented.

Embodiments of the present invention also provide a computer-readable storage medium having stored therein computer programs that, when executed by a processor, cause steps in the method for sending downlink control information according to any of the above embodiments to be implemented.

As shown in FIG. 10, FIG. 10 is a schematic block diagram of an apparatus 1000 for sending downlink control information according to embodiments of the present invention. The apparatus 1000 may be provided as a base station. Referring to FIG. 10, the apparatus 1000 includes a processing component 1022, a wireless transmitting/receiving component 1024, an antenna component 1026, and a signal processing portion specific to the wireless interface. The processing component 1022 may further include one or more processors. One processor in the processing components 1022 may be configured to implement the method for sending downlink control information as described in any of the above embodiments.

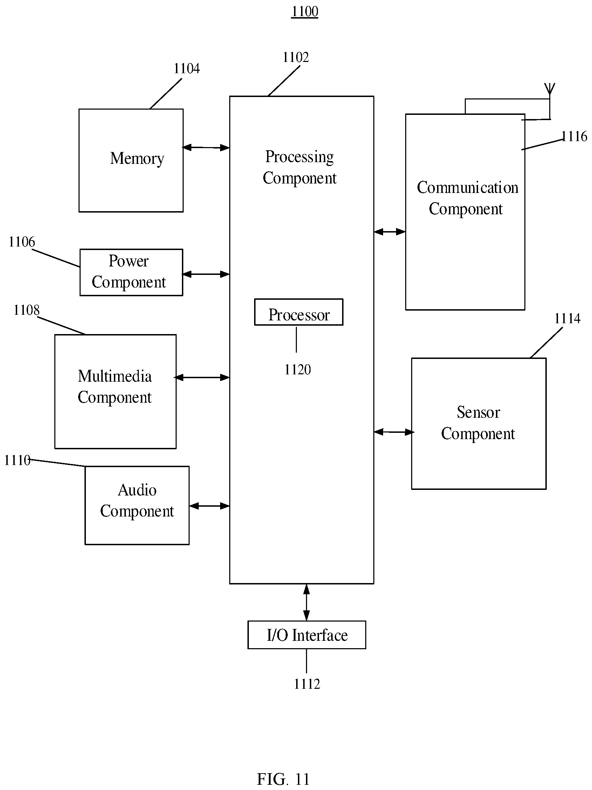

FIG. 11 is a schematic block diagram of an apparatus 1100 for scheduling determination according to embodiments of the present invention. For example, the apparatus 1100 may be a mobile phone, a computer, a digital broadcast terminal, a messaging device, a game console, a tablet device, a medical device, a fitness device, a personal digital assistant, or the like.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, phone calls, data communications, camera operations, and recording operations. The processing component 1102 can include one or more processors 1120 to execute instructions to perform all or some of the steps in the above-described scheduling determination method. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may further include a light sensor, such as a CMOS or CCD image sensor, for use in imaging applications. In some embodiments, the sensor component 1114 may further include an accelerometer sensor, a gyroscope sensor, a magnetic sensor, a pressure sensor, or a temperature sensor.

The communication component 1116 is configured to facilitate communication, wired or wireless, between the apparatus 1100 and other devices. The apparatus 1100 can access a wireless network based on a communication standard, such as Wi-Fi, 2G, 3G, 4G LTE, 5G NR or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing steps of the scheduling determination method in the above-mentioned embodiments.

In an illustrative embodiment, there is also provided a non-transitory computer readable storage medium including instructions, such as included in the memory 1104, executable by the processor 1120 in the apparatus 1100, for completing the above-mentioned scheduling determination method. For example, the non-transitory computer-readable storage medium may be a ROM, a random access memory (RAM), a CD-ROM, a magnetic tape, a floppy disc, an optical data storage device, and the like

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as illustrative only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and apparatuses provided by the embodiments of the present invention have been described in detail above, and specific examples are used to illustrate the principle and implementation of the present invention. The description of the above embodiments is only used to help understand the methods and core ideas of the present invention. At the same time, for those skilled in the art, there will be some changes in the specific implementation and application scope according to the idea of the present invention. In summary, the content of the specification should not be construed as a limitation on the present invention.

## Claims

1. A scheduling determination method, performed by a terminal, comprising:
receiving downlink control information (DCI) sent by a network device;
determining relevant information associated with the DCI; and
determining a scheduling state of the DCI according to an association relationship between the relevant information and the scheduling state, wherein the scheduling state comprises scheduling a single cell or scheduling multiple cells.

2. The method according to claim 1, wherein the relevant information comprises at least one of:
a radio network temporary identity (RNTI) used to scramble the DCI; or
a resource used to receive the DCI.

3. The method according to claim 2, wherein the resource comprises at least one of:
a cell;
a bandwidth part (BWP);
a control resource set (CORESET); or
a search space (SS).

4. The method according to any one of claims 1 to 3, further comprising:
determining the association relationship according to a protocol; and/or
determining the association relationship according to indication information sent by the network device.

5. A scheduling determination method, performed by a terminal, comprising:
receiving downlink control information (DCI) sent by a network device; and
determining according to indication information sent by the network device that the DCI is used to schedule a single cell or to schedule multiple cells.

6. The method according to claim 5, wherein the indication information comprises at least one of:
a radio resource control (RRC) message;
the DCI; or
a medium access control control element (MAC CE).

7. The method according to claim 6, wherein in a case where the indication information comprises the RRC message, the indication information comprises a time pattern, the time pattern is configured through a bitmap in the RRC message, the bitmap comprises n bits, and an i-th bit of the n bits indicates that DCI in an i-th time-domain unit of n time-domain units is used to schedule the single cell or to schedule the multiple cells, where n and i are integers, and 1≤i≤n.

8. The method according to claim 7, wherein the time-domain unit comprises at least one of:
at least one radio frame;
at least one slot; or
at least one time-domain symbol.

9. The method according to claim 6, wherein in a case where the indication information comprises the DCI, the indication information is indicated through a preset information field in the DCI, and the preset information field comprises an information field at a preset position or before the preset position in the DCI.

10. The method according to claim 6, wherein in a case where the indication information comprises the MAC CE, determining according to the indication information sent by the network device that the DCI is used to schedule the single cell or to schedule the multiple cells comprises:
determining that the DCI is used to schedule the multiple cells, when it is determined according to the MAC CE that single-cell scheduling is deactivated or multi-cell scheduling is activated; and/or
determining that the DCI is used to schedule the single cell, when it is determined according to the MAC CE that single-cell scheduling is activated or multi-cell scheduling is deactivated.

11. A method for sending downlink control information (DCI), performed by a network device, comprising:
determining a scheduling state of the DCI, wherein the scheduling state comprises scheduling a single cell or scheduling multiple cells;
setting relevant information associated with the DCI according to an association relationship between the relevant information associated with the DCI and the scheduling state; and
sending the DCI to a terminal.

12. The method according to claim 11, wherein the relevant information comprises at least one of:
a radio network temporary identity (RNTI) used to scramble the DCI; or
a resource used to receive the DCI.

13. The method according to any one of claims 11 to 12, further comprising:
determining the association relationship according to a protocol; and/or
sending indication information to the terminal, wherein the indication information indicates the association relationship.

14. A method for sending downlink control information (DCI), performed by a network device, comprising:
sending indication information to a terminal, wherein the indication information indicates that the DCI sent to the terminal is used to schedule a single cell or to schedule multiple cells; and
sending the DCI to the terminal.

15. The method according to claim 14, wherein the indication information comprises at least one of:
a radio resource control (RRC) message;
the DCI; or
a medium access control control element (MAC CE).

16. The method according to claim 15, wherein in a case where the indication information comprises the RRC message, the indication information comprises a time pattern, the time pattern is configured through a bitmap in the RRC message, the bitmap comprises n bits, and an i-th bit of the n bits indicates that DCI in an i-th time-domain unit of n time-domain units is used to schedule the single cell or to schedule the multiple cells, where n and i are integers, and 1≤i≤n.

17. The method according to claim 15, wherein in a case where the indication information comprises the DCI, the indication information is indicated through a preset information field in the DCI, and the preset information field comprises an information field at a position that is ranked at a preset rank or before the preset rank in the DCI.

18. The method according to claim 15, wherein the indication information comprises the MAC CE,
in a case where the MAC CE is used to deactivate single-cell scheduling or activate multi-cell scheduling, the MAC CE indicates that the DCI is used to schedule the multiple cells, and/or
in a case where the MAC CE is used to activate single-cell scheduling or deactivate multi-cell scheduling, the MAC CE indicates that the DCI is used to schedule the single cell.

19. A scheduling determination apparatus, comprising:
a receiving module, configured to receive downlink control information (DCI) sent by a network device; and
a processing module, configured to: determine relevant information associated with the DCI; and determine a scheduling state of the DCI according to an association relationship between the relevant information and the scheduling state, wherein the scheduling state comprises scheduling a single cell or scheduling multiple cells.

20. A scheduling determination apparatus, comprising:
a receiving module, configured to receive downlink control information (DCI) sent by a network device; and
a processing module, configured to determine according to indication information sent by the network device that the DCI is used to schedule a single cell or to schedule multiple cells.

21. An apparatus for sending downlink control information, comprising:
a processing module, configured to: determine a scheduling state of the downlink control information (DCI), wherein the scheduling state comprises scheduling a single cell or scheduling multiple cells; and set relevant information associated with the DCI according to an association relationship between the relevant information associated with the DCI and the scheduling state; and
a sending module, configured to send the DCI to a terminal.

22. An apparatus for sending downlink control information, comprising: a sending module, configured to:
send indication information to a terminal, wherein the indication information indicates that the downlink control information (DCI) sent to the terminal is used to schedule a single cell or to schedule multiple cells; and
send the DCI to the terminal.

23. A communication device, comprising:
a processor; and
a memory for storing computer programs;
wherein when the computer programs are executed by the processor, the scheduling determination method according to any one of claims 1 to 10 is implemented.

24. A communication device, comprising:
a processor; and
a memory for storing computer programs;
wherein when the computer programs are executed by the processor, the method for sending downlink control information according to any one of claims 11 to 18 is implemented.

25. A computer-readable storage medium having stored therein computer programs that, when executed by a processor, cause steps in the scheduling determination method according to any one of claims 1 to 10 to be implemented.

26. A computer-readable storage medium having stored therein computer programs that, when executed by a processor, cause steps in the method for sending downlink control information according to any one of claims 11 to 18 to be implemented.
